(19) Europäisches Patentamt

European Patent Office

Office européen des brevets

(11) EP 1 500 790 B1

(12) **EUROPÄISCHE PATENTSCHRIFT**

(45) Veröffentlichungstag und Bekanntmachung des Hinweises auf die Patenterteilung:
07.08.2013 Patentblatt 2013/32

(51) Int Cl.:
*C23C 28/00* (2006.01)   *C23C 28/04* (2006.01)
*C23C 30/00* (2006.01)   *C23C 4/10* (2006.01)
*F01D 11/12* (2006.01)

(21) Anmeldenummer: 04090253.8

(22) Anmeldetag: 23.06.2004

(54) **Deckbandsegment für eine Strömungsmaschine**

Shroud segment for a turbomachine

Segment de virole pour une turbomachine

(84) Benannte Vertragsstaaten:
**DE FR GB**

(30) Priorität: **25.07.2003 DE 10334698**

(43) Veröffentlichungstag der Anmeldung:
**26.01.2005 Patentblatt 2005/04**

(73) Patentinhaber: **Rolls-Royce Deutschland Ltd & Co KG**
**15827 Blankenfelde-Mahlow (DE)**

(72) Erfinder:
• **Roth-Fagaraseanu, Dan**
**OT Güterfelde 14532 Stahnsdorf (DE)**
• **Wunderlich, Thomas**
**15834 Rangsdorf (DE)**

(74) Vertreter: **Gross, Felix et al**
**Patentanwälte Maikowski & Ninnemann**
**Postfach 15 09 20**
**10671 Berlin (DE)**

(56) Entgegenhaltungen:
**EP-A1- 0 487 273     EP-A2- 0 965 730**
**WO-A-99/23278**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Deckbandsegment für eine Strömungsmaschine, insbesondere für eine Flugzeugturbine, mit einem Strömungskanal und mit einem in diesem angeordneten Schaufelrad, die eine rotierende Relativbewegung zueinander ausführen und von einem heißen Arbeitsgas durchströmt werden

Bei Strömungsmaschinen, beispielsweise Flugtriebwerken oder stationären Gasturbinen, ist es zur Erzielung eines hohen Wirkungsgrades erforderlich, dass der Dichtspalt zwischen den Spitzen der an einem Rotor angebrachten Laufschaufeln und der Innenfläche eines diese umgebenden Gehäuses möglichst klein ist. Die geforderte minimale Dichtspaltbreite wird in bekannter Weise dadurch erreicht, dass die zur Wärmeisolierung des metallischen Gehäuses an der Innenfläche des Gehäuses ausgebildete, eine geringe Wärmeleitfähigkeit aufweisende Keramikschicht gleichermaßen als Abrieb- oder Anschleifschicht, im Folgenden als Anstreifschicht bezeichnet, fungiert. Zur Erzielung des gewünschten Abriebs oder Einschleifens ist dem keramischen Material in einer bekannten Aus-führungsform ein ausbrennbarer Stoff, zum Beispiel ein Polymerpulver, beigemischt, der eine Porosität der Anstreifschicht und somit das Freisetzen freier Partikel aus deren Oberfläche durch die relativ zum Gehäuse bewegten Schaufelspitzen bewirkt. Bei stationär angeordneten Schaufeln kann die keramische Abstreifschicht auch an einem rotierenden Maschinenteil vorgesehen sein. Anders als bei den oben beschriebenen drehbeweglichen deckbandfreien Schaufelspitzen und den diesen gegenüberliegenden stationären, mit einer Keramikschicht versehenen Deckbandsegmenten, können auch an den Spitzen stationärer Schaufeln mit einer keramischen Anstreifschicht versehene - anschleifbare - Deckbänder ausgebildet sein.

Aus der EP-A1-0 965 730 ist ein Dichtbandsegment bekannt, das auf einem Dichtungsschuh aus einem Superlegierungsmaterial mit einer anhaftenden Aluminiumoxidlage gebildet ist. Dabei ist eine relativ dichte und erosionsbeständige Keramiklage über der Aluminiumoxidlage aufgebracht. Das Dichtbandsegment weist auch eine poröse abradierbare Keramiklage auf, die über einen Teil der erosionsbeständigen Keramiklage aufgebracht ist und mit dem Bereich korrespondiert, in dem das Dichtbandsegment mit einem Satz von Turbinenlaufschaufeln zusammenwirkt, um die Abdichtung zu schaffen.

Ein weiteres Deckbandsegment für eine Strömungsmaschine ist aus der EP-A1-0 487 273 vorbekannt. Dieses umfasst eine Beschichtung aus einem thermischen Sprühpulver, welches eine matrixbildende Komponente, ein Trockenschmiermittel und einen Kunststoff umfasst. Dabei ist die Matrix eine quasikontinuierliche Phase, während der Kunststoff und das Trockenschmiermittel in der Matrix als diskrete Pertikel oder Körper fein verteilt sind.

In der US 61 02 656 und der US 57 05 231 werden weitere Anstreifschichten beschrieben, z. B. eine auf das metallisches Substrat eines Strömungskanalsegments aufgebrachte segmentierte, anschleifbare keramische Beschichtung. Diese umfasst eine Basisschicht aus mit Ceroxid, Magnesiumoxid, Yttriumoxid oder Calciumoxid stabilisiertem Zirkonoxid, an die sich eine Zwischenschicht und eine zur Spaltausbildung anschleifbare Deckschicht anschließen, die ebenfalls aus dem wärmedämmenden keramischen Zirkonoxid als Basismaterial bestehen.

In verschiedenen weiteren Veröffentlichungen, wie z. B. US 5,530,050, US 5,866,271 oder US 5,997,248 werden zur selbsttätigen Spaltausbildung und zur Reduzierung der Oberflächentemperatur der den Schaufelspitzen gegenüberliegenden Bauteile und zu deren Schutz vor Überhitzung, stark wärmedämmende, abreibbar ausgebildet Beschichtungen auf der Grundlage von Zirkonoxid verwendet, das einen sehr geringen Wärmeleitkoeffizienten hat, eine dickwandige Schicht bildet und zumindest in dem zu.den Schaufelspitzen weisenden Bereich derart strukturiert ist, dass mit den Schaufelspitzen eine Abriebfläche zur Erzeugung eines möglichst engen Dichtspaltes zwischen den stationären und rotierenden Bauteilen geschaffen wird.

Die zirkonbasierten Anstreifschichten sind jedoch insofern nachteilig, als diese in einem Temperaturbereich oberhalb 1200°C zum Sintern und zu Phasenumwandlungen neigen, in deren Folge das keramische Material spröde wird und dessen Haftfähigkeit an dem metallischen Substrat verringert wird. Auch eine Kühlung der in diesem hohen Temperaturbereich betriebenen Gasturbine mit zirkonbasierter Anstreifschicht mit einem an der Rückseite der metallischen Unterlage vorbeigeführten Kühlmedium ist - wie selbst bei einem großen Kühlmassenstrom durchgeführte Versuche ergeben haben - nicht in der Lage, der Versprödung und Ablösung des wärmedämmenden und in einer vorgegebenen, ausreichend großen Schichtdicke ausgebildeten abriebfähigen keramischen Materials entgegenzuwirken.

Die herkömmlichen keramischen Anstreifschichten auf der Basis von Zirkonoxid weisen zwar einen extrem niedrigen Wärmeleitkoeffizienten und somit ein gutes Wärmedämmverhalten auf, können andererseits aber bei sehr hohen Gastemperaturen und/oder großen Schichtdicken und einer demzufolge erforderlichen Kühlung aufgrund der selbstisolierenden Wirkung des Zirkonoxids und in Verbindung mit der für das Anschleifen der Anstreifschicht erforderlichen Schichtdicke selbst mit einem großen Kühlmittelstrom nicht oder nicht in dem bei entsprechend hohen Arbeitsgastemperaturen erforderliche Umfang gekühlt werden.

Der Erfindung liegt die Aufgabe zugrunde, das mit einer einschleifbaren keramischen Anstreifschicht versehene Deckbandsegment einer Strömungsmaschine, in dem die Schaufelspitzen eines Schaufelrades der Innenfläche eines Strömungskanals gegenüberstehen und eine rotatorische Relativbewegung zueinander ausführen, so auszubilden, dass die Funktion der Anstreifschicht zur Erzeugung und Aufrechterhaltung eines engen Dichtspaltes zwischen den Schaufelspitzen und der Strömungskanalwand auch bei hohen Arbeitsgastemperaturen gewährleistet ist.

Die Lösung dieser Aufgabe ergibt sich aus den Merkmalen des einzigen Patentanspruches.

Mit der erfindungsgemäßen Lösung können die entsprechenden Bauteile, beispielsweise in der Hochdruckturbinenstufe eines Flugtriebwerkes, bei sehr hohen Arbeitsgastemperaturen mit einem erhöhten Wirkungsgrad betrieben werden, wobei in diesem hohen Temperaturbereich hinsichtlich Materialbeständigkeit und erforderlicher Schichtdicke die Funktion der anschleifbaren Antreifschicht zur Ausbildung eines engen Dichtspaltes zwischen den Schaufelspitzen und der diesen benachbarten Innenfläche des Strömungskanals gewährleistet ist. Die anschleifbare Antreif-schicht wird von der Rückseite des metallischen Substrats, an dem diese anhaftet, gekühlt.

Um das Einlaufen bzw. Anschleifen des keramischen Materials zu gewährleisten, ist die erfindungsgemäße Antreifschicht aus einer an das metallische Bauteil anschließenden kompakten Keramikschicht und heißgasseitig aus einer porösen Keramikschicht gebildet.

Die Bindung der Antreifschicht an das metallische Substrat erfolgt über eine räumlich angeordnete Haftschicht, die entweder integraler Bestandteil der metallischen Unterlage ist oder als zusätzliche Auflage, zum Beispiel in Form eines Drahtgitters, ausgebildet und in geeigneter Weise, zum Beispiel durch thermische Fügeverfahren, mit dem Substrat, das heißt, der metallischen Unterlage, verbunden ist. Ein weiteres Beispiel ist die Bindung grober Pulverpartikel einer Hochtemperaturlegierung durch Fügeprozesse an die Oberfläche. In beiden Fällen entstehen 3D-Strukturen, die dadurch gekennzeichnet sind, dass die mechanische Verklammerung der keramischen Schicht auf dem Substrat verbessert wird.

Die Anwendung der Erfindung erfolgt vorzugsweise bei Flugzeugtriebwerken, deren rotierende Schaufelräder ohne Spitzendeckband ausgebildet sind und deren deckbandfreien Schaufelspitzen in dem Strömungskanal ein statio-näres, mit der Antreifschicht versehenes Deckbandsegment gegenübersteht. Die Erfindung kann jedoch generell bei Bauteilen von insbesondere bei hohen Temperaturen betriebenen Strömungsmaschinen mit einer Relativbewegung zwischen einem rotierenden und einem stationären Teil angewendet werden, bei denen zur Ausbildung eines möglichst engen, zwischen beiden Teilen verbleibenden Spaltes das eine Bauteil mit einer von dem anderen Bauteil einschleifbaren keramischen Antreifschicht belegt ist.

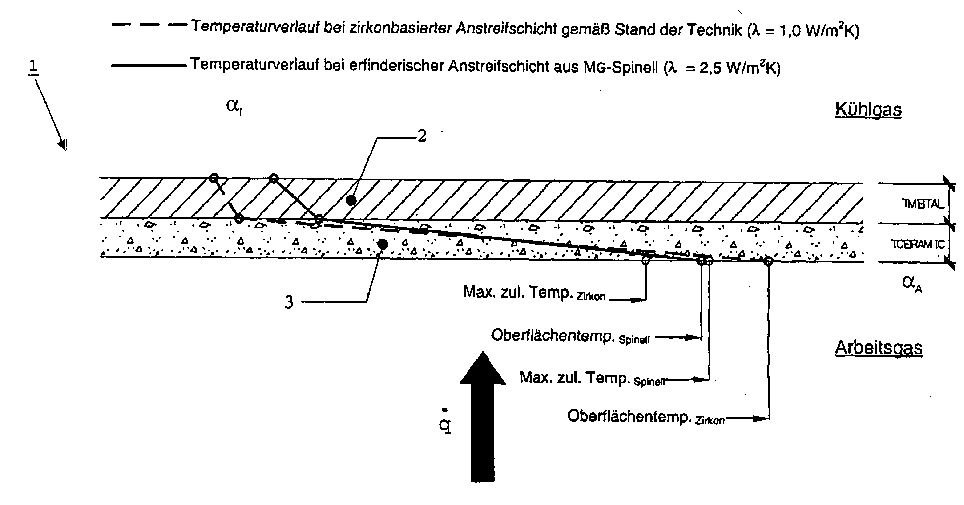

Ein Ausführungsbeispiel der Erfindung wird anhand der Zeichnung, in deren einziger Figur bei einem rotierenden Schaufelrad ein den deckbandfreien Schaufelspitzen gegenüberstehendes stationäres, gekühltes Deckbandsegment mit dem jeweiligen Temperaturverlauf bei einer nach dem Stand der Technik bzw. bei einer erfindungsgemäß ausge-führten Antreifschicht im Schnitt dargestellt ist.

Das stationäre Deckbandsegment 1 umfasst eine metallische Unterlage 2 (Substrat) und eine fest an dieser haftende anschleifbare Antreifschicht 3 aus einem hochwarmfesten keramischen Material. Die an die Antreifschicht 3 unter Freilassung eines sehr engen Spaltes anschließenden Turbinenschaufelspitzen sind in der Zeichnung nicht dargestellt. Entlang der Antreifschicht 3 strömt mit einer bestimmten Temperatur ($Temp_{Arbeitsgas}$), die beispielsweise 1500°C betragen kann, ein über eine Leitschaufel von der Brennkammer (nicht dargestellt) eines Flugzeugtriebwerks zugeführtes Arbeitsgas, während an der Rückseite der metallischen Unterlage 2 des Deckbandsegments 1 ein Kühlgas mit einer Temperatur $Temp_{Kühlgas}$ strömt. Der spezifische Wärmestrom in Richtung des fettgedruckten Pfeils ergibt sich aus

$$\dot{q} = k\ (Temp_{Arbeitsgas} - Temp_{Kühlgas}),$$

wobei k der Wärmedurchgangskoeffizient ist, der sich aus den Wärmeübergangskoeffizienten auf der Arbeitsgas- bzw. Kühlgasseite $\alpha_I$ und $\alpha_A$, der Stärke des metallischen Substrats bzw. der Antreifschicht $T_{metall}$ und $T_{ceramic}$ sowie dem entsprechenden Wärmeleitkoeffizienten $\lambda_{metall}$ und $\lambda_{ceramic}$ errechnet.

In der Zeichnung ist die Antreifschicht 3 zum einen auf der Basis von Zirkonium mit einem bei Arbeitstemperatur extrem niedrigen Wärmeleitkoeffizienten von $\lambda = 1{,}0\ W/m^2K$ gemäß dem Stand der Technik und zum anderen auf der Basis von Magnesium-Spinell mit einem hohen Wärmeleitkoeffizienten von $\lambda \geq 2{,}0\ W/m^2K$ gemäß der vorliegenden Erfindung gebildet. Bei ansonsten hinsichtlich Kühlgas - und Arbeitsgastemperatur sowie Wandstärke und Schichtdicke übereinstimmenden Randbedingungen zeigt die strichlierte Linie zunächst den Temperaturverlauf im Deckbandsegment 1 bei einer herkömmlichen Antreifschicht auf Zirkoniumbasis. Daraus ist ersichtlich, dass die Oberflächentemperatur (Oberflächentemp.$_{Zirkon}$) der gemäß dem Stand der Technik zirkoniumbasierten Antreifschicht weit über der maximal zulässigen Temperatur (Max.zul.Temp.$_{Zirkon}$) liegt, weil die Kühlwirkung des Kühlgases aufgrund der selbstisolierenden Wirkung des Zirkoniumoxids unzureichend ist. Die Antreifschicht versprödet und kann sich von dem metallischen Substrat lösen und wird letztlich ihrer Funktion zur Ausbildung eines möglichst engen Spaltes mit den daraus resultierenden negativen Folgen für den Wirkungsgrad nicht gerecht.

Hingegen geht aus dem mit der durchgezogenen Linie wiedergegebenen Temperaturverlauf bei einer erfin-dungsgemäßen Antreifschicht mit einem hohen Wärmeleitkoeffizienten deutlich hervor, dass die Oberflächentemperatur der aus einem Magnesium-Spinell bestehenden Antreifschicht (Oberflächentemp.$_{Spinell}$) noch unter der für die spinellbasierte Anstreifschicht liegenden maximal zulässigen Temperatur (Max.zul.Temp.$_{Spinell}$) und weit unter der Oberflächentemperatur der zirkoniumbasierten Anstreifschicht (O-berflächentemp.$_{Zirkon}$) liegt. Selbst bei hohen Arbeitsgastemperaturen oder einem vergleichsweise niedrigen Kühlgasmassenstrom wird die erfindungsgemäße keramische Anstreifschicht mit vergleichsweise hoher Wärmeleitfähigkeit somit nicht zerstört und bleibt in vollem Umfang funktionsfähig.

**Patentansprüche**

1.   Deckbandsegment (1) für eine Strömungsmaschine, insbesondere für eine Flugzeugturbine, mit einem Strömungskanal und mit einem in diesem angeordneten Schaufelrad, die eine rotierende Relativbewegung zueinander ausführen und von einem heißen Arbeitsgas durchströmt werden,
wobei das Deckbandsegment (1) ein vom Strömungskanal gebildetes metallisches Substrat (2) und eine mit dessen Innenfläche verbundene, zur Ausbildung eines engen Dichtspaltes durch die Schaufelspitzen anschleifbare, hochwarmfeste, wärmeleitende keramische Anstreifschicht (3) umfasst,
wobei das metallische Substrat (2) mit seiner Aussenfläche einem Kühlgapstrom auf der Aussenseite des Strömungskanals aussetzbar ist,
wobei die Innenfläche des porösen keramischen Materials der Anstreifschicht (3) zur Bildung eines engen Dichtspaltes durch die Schaufelspitzen des Schaufelrades abschleifbar ist,
wobei die keramische Anstreifschicht (3) aus einem Zweischichtensystem aus einem kompakten keramischen Material auf der Basis von Zirkonium mit einem bei Arbeitstemperatur extrem niedrigen Wärmeleitkoeffizienten λ von 1,0 W/m$^2$K und einem porösen keramischen Material auf der Basis von Spinell, insbesondere Magnesium-Spinell, mit einem bei Arbeitstemperatur hohen Wärmeleitkoeffizienten λ von größer als 2,0 W/m$^2$K und einer Dicke größer als 0,4 mm gebildet ist und die Porosität des keramischen Materials auf Zusätzen von hexagonalem Bornitrid beruht,
und wobei die Aussenfläche des kompakten keramischen Materials der Anstreifschicht (3) unmittelbar mit der Innenfläche des metallischen Substrates (2) über ein räumlich ausgebildetes Haftelement aus durch ein thermisches Fügeverfahren an das metallische Substrat (2) angeschlossenen Pulverpartikeln einer Hochtemperaturlegierung verbunden ist.

**Claims**

1.   Shroud segment (1) for a fluid-flow machine, in particular for an aircraft turbine, with a flow duct and a bladed rotor wheel arranged in the flow duct which perform a rotary movement relative to one another and are flown through by a hot working gas,
with the shroud segment (1) including a metallic substrate (2) formed by the flow duct and a high-temperature resistant, thermally conductive, ceramic abradable coating (3) which is connected to the inner surface of the substrate and is subjectable to wear by the blade tips for the formation of a narrow sealing gap,
with the metallic substrate (2) being exposable on its outer surface to a cooling gas flow on the outside of the flow duct,
with the inner surface of the porous ceramic material of the abradable coating (3) being subjectable to abrasion by the blade tips of the bladed rotor wheel for the formation of a narrow sealing gap,
with the ceramic abradable coating (3) being formed by a two-coat system of a compact ceramic material on the basis of Zirconium having an extremely low coefficient of thermal conductivity λ of 1.0 W/m$^2$K at operating temperature and of a porous ceramic material on the basis of spinel, in particular magnesium spinel, having a high coefficient of thermal conductivity λ greater than 2.0 W/m$^2$K at operating temperature, and a thickness greater than 0.4 mm,
with the porosity of the ceramic material being due to additions of hexagonal boron nitride,
and with the outer surface of the compact ceramic material of the abradable coating (3) being directly connected to the inner surface of the metallic substrate (2) via a three-dimensionally designed bonding element consisting of powder particles of a high-temperature alloy bonded to the metallic substrate (2) by means of a thermal jointing process.

**Revendications**

1.   Segment de virole (1) pour une machine à écoulement, en particulier pour une turbine d'avion, avec un canal d'écoulement et une roue à aubes placée dans ledit canal, qui effectuent un mouvement rotatif relatif l'un par rapport à l'autre et sont traversés par un gaz de travail chaud,
sachant que le segment de virole (1) comprend un substrat métallique (2) formé par le canal d'écoulement et, reliée à sa face intérieure, une couche abradable (3) céramique, résistante aux hautes températures et thermoconductrice, qui peut être meulée s'user par le contact des bouts d'aubes afin de former une étroite fente d'étanchéité, sachant que, avec son face extérieure, le substrat métallique (2) peut être exposée à un flux de gaz de refroidissement du côté extérieur du canal d'écoulement, sachant que la face intérieure du matériau céramique poreux de la couche abradable (3) peut s'user par le contact des bouts d'aubes de la roue à aubes afin de former une étroite fente d'étanchéité, sachant que la couche abradable (3) céramique est formée par un système à deux couches constitué d'une part d'un matériau céramique compact à base de zirconium avec un coefficient de conductibilité thermique $\lambda$ extrêmement faible de 1,0 W/m$^2$K à la température de travail, et d'autre part d'un matériau céramique poreux à base de spinelle, en particulier de spinelle de magnésium, avec un coefficient de conductibilité thermique $\lambda$ élevé supérieur à 2,0 W/m$^2$K à la température de travail et une épaisseur supérieure à 0,4 mm, que la porosité du matériau céramique est due à des apports de nitrure hexagonal de bore, et que la face extérieure du matériau céramique compact de la couche abradable (3) est directement reliée à la face intérieure du substrat métallique (2) par un élément adhésif tridimensionnel constitué de particules poudreuses d'un alliage haute température adjointes au substrat métallique (2) au moyen d'un procédé d'assemblage thermique.

— — — Temperaturverlauf bei zirkonbasierter Anstreifschicht gemäß Stand der Technik ($\lambda$ = 1,0 W/m²K)

———— Temperaturverlauf bei erfinderischer Anstreifschicht aus MG-Spinell ($\lambda$ = 2,5 W/m²K)

$\alpha_I$

Kühlgas

$T_{METAL}$

$T_{CERAMIC}$

$\alpha_A$

Max. zul. Temp. Zirkon

Oberflächentemp. Spinell

Arbeitsgas

Max. zul. Temp. Spinell

Oberflächentemp. Zirkon

$\dot{q}$

EP 1 500 790 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0965730 A1
- EP 0487273 A1
- US 6102656 A
- US 5705231 A
- US 5530050 A
- US 5866271 A
- US 5997248 A